# EUROPEAN PATENT APPLICATION

(11) **EP 1 758 305 A1**
(43) Date of publication of application: **28.02.2007**
(21) Application number: 05738970.2
(22) Date of filing: 12.05.2005
(51) Int. Cl.: H04L 12/28, H04L 12/46, H04L 12/56, H04Q 7/22, H04Q 7/36

(54) **ACCESS NETWORK SYSTEM, CONNECTION STATION DEVICE, RADIO BASE STATION DEVICE, AND PACKET LOSS REDUCING METHOD**

(30) Priority: 18.05.2004 JP 2004147500
(71) Applicant: MATSUSHITA ELECTRIC INDUSTRIAL CO., LTD., Osaka 571-8501 (JP)
(72) Inventor: KAWAKAMI, Tetsuya, Matsushita Elect. Ind. Co,Ltd, Chuo-ku,Osaka-shi, Osaka 540-6319 (JP)
(74) Representative: Jackson, Martin Peter
(86) International application number: PCT/JP2005/008720
(87) International publication number: WO 2005/112356

(57) **Abstract**

The present invention discloses a technique to reduce packet loss during the handover of a mobile terminal and to eliminate wasteful consumption of band. According to this technique, a connection station 103 and a radio base station 104 where a mobile terminal 100 is connected generate a plurality of own MAC addresses based on identification information of the mobile terminal, and when the handover is started, a network management unit 106 makes up a point-to-multipoint VLAN path where VLAN path between new radio base station device and the connection station device is added to the VLAN path between previous radio base station device and the connection station device, and the connection station device adds a broadcast address, a MAC address of the connection station device, and an identification information of the mobile terminal to a packet received from the external IP network 101, and the packet is transferred via the point-to-multipoint VLAN path.

## Description

### TECHNICAL FIELD

The present invention relates to an access network system, a connection station device, a radio base station device, and a packet loss reducing method for achieving mobility control in Wide-Area Ethernet (registered trademark).

### BACKGROUND ART

In the past, a mobile IP has been adopted for mobility control in IP network. The mobile IP is a technique, by which communication can be carried out by the same IP address regardless of the network, to which the mobile terminal is connected. A home agent in charge of the management of position of the mobile terminal (hereinafter, also referred as "HA") receives a packet instead of the mobile terminal and transfers it to the mobile terminal. When the mobile terminal moves in a network during communication, the change of network address is notified and the destination of the transfer of the packet is changed. However, during the time from the change of the network address of the mobile terminal to the notification of the change to HA, the packet to the mobile terminal is transferred to the network before moving, and it is abandoned. Specifically, when communication distance between the mobile terminal and HA is long, more time is required for the handover, and the amount of the packet loss increases accordingly. For this reason, a fast changeover method is proposed, which is based on the changeover of the tunnel using label in the access network to connect user with ISP (Internet Service Provider) for the purpose of speeding up the handover. This fast changeover method is disclosed in the Non-Patent Document 1 as given below. According to this method, signaling time is reduced by the signaling closed in access net, and a label independent from IP address is used. As a result, the processing to change IP address can be eliminated, and fast handover can be achieved compared with mobile IP. Also, the Non-Patent Document 2 as given below discloses a method, in which mobile terminal has temporarily both the network address before moving and the network address after moving as extension of the mobile IP, and access router (AR) copies and transfers the packet to both of the network addresses temporarily.
[Non-Patent Document 1] Tetsuya KAWAKAMI, Satoshi IINO, and Yoshihiro SUZUKI: "A Review of Mobility Control in Wide Area Ethernet (Registered Trademark)"; The Institute of Electronics, Information and Communication Engineers; October 2002.
[Non-Patent Document 2] Simultaneous Bindings for Mobile IPv6 Fast Handovers <draft-elmalki-mobileip-bicasting-v6-5.txt>

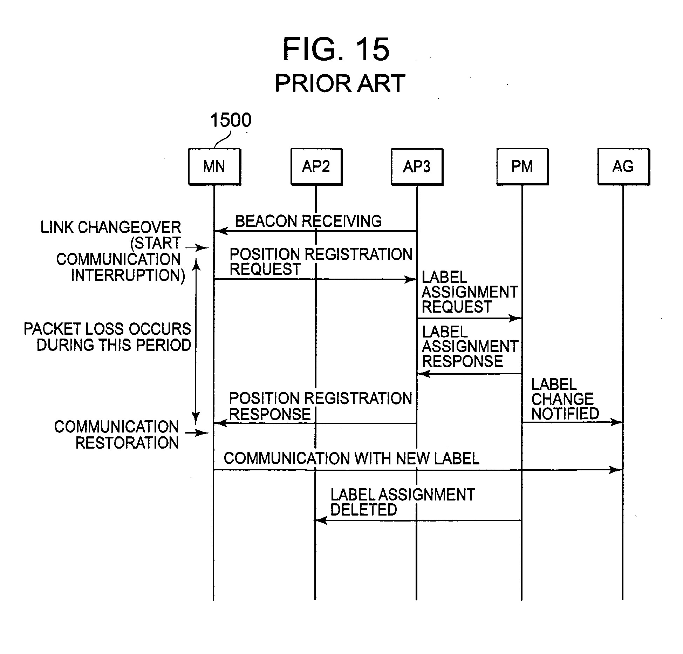

However, when the method to changeover the path to high speed by using VLAN (Virtual LAN) path as described in the Non-Patent Document 1, fast changeover can be performed without the processing such as the change of IP address, and the time for changeover can be reduced, while there remains a problem that packet loss occurs until the changeover of path is completed after moving to new area (link changeover) at the time of path changeover. More concretely, after MN (mobile terminal) 1500 moves to a new area as shown in Fig. 15, packet loss occurs before the resumption of communication after the return of position registration response of the subscriber (communication restoration). On the other hand, in order to eliminate the packet loss, it is disclosed in the Non-Patent Document 2 with extended mobile IP, that soft handover is adopted so that the same packet will be transferred to both the base station before moving and the base station after moving.

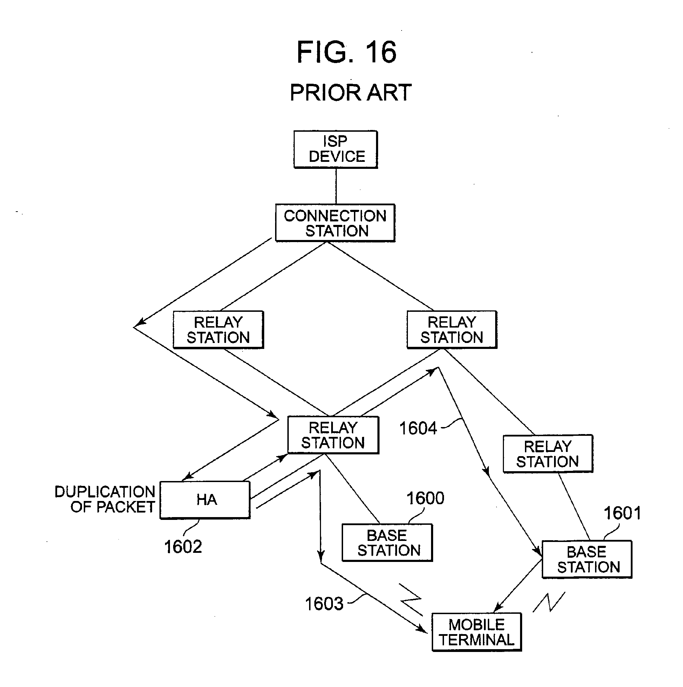

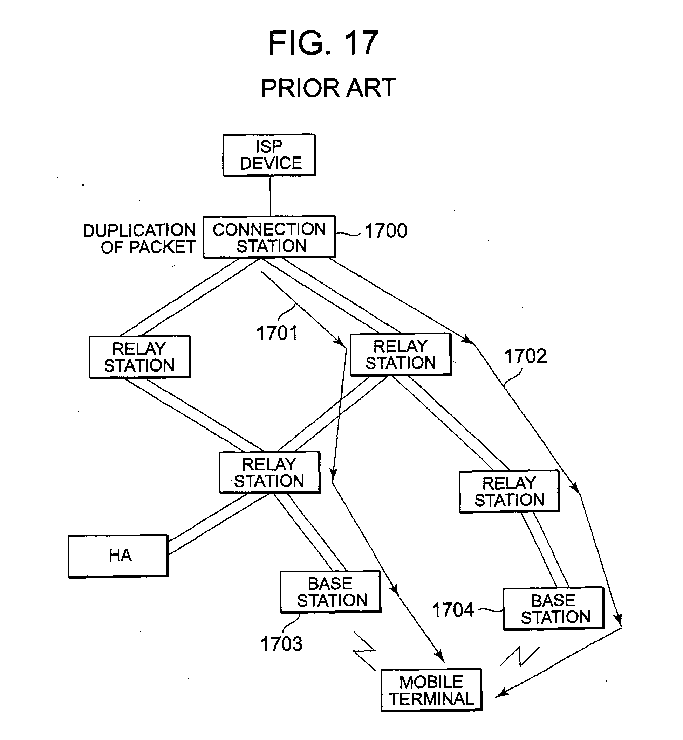

According to this method, as shown in Fig. 16, CoA (Care of Address) (1) as given from the base station 1600 before moving and CoA (2) given from the base station 1601 of mobile destination are notified to HA 1602. HA 1602 makes up IP tunnels 1603 and 1604 to each of CoA (1) and (2) respectively, and after copying the same packet, the packets are transferred via two IP tunnels 1603 and 1604. In this method, twice as many packets are always outputted from HA 1602, and the band is used wastefully. Also, it is necessary to perform duplication of the packet at HA 1602. Together with the processing of IP tunnel,'this is the cause to increase the processing load at HA 1602. Also, when this processing is performed at AR, it is necessary to have extension so that this processing can be performed to all of ARs, and it is difficult to make up system configuration by using the existing device. Also, as shown in Fig. 17, when soft handover is applied in the method using label, the connection station 1700 must duplicate the same packet to the corresponding two paths 1701 and 1702 and must transmit at the connection station 1700 used as the edge point of the path. Because the two paths with different labels are used from the connection station 1700 to the base stations 1703 and 1704, the connection station 1700 must transfer double packets although the same path is used to the middle of the way, and this means that the bands are used wastefully.

### DISCLOSURE OF THE INVENTION

To solve the above problems, it is an object of the present invention to provide an access network system, a connection station device, a radio base station device and a packet loss reducing method, by which it is possible to reduce the packet loss during the handover of the mobile terminal and to eliminate wasteful consumption of the band.

To attain the above object, the present invention provides an access network system, which comprises a mobile terminal, a connection station device connected with an external IP network to relay the communication between said mobile terminal and said external IP network, to which said mobile terminal belongs, a relay station device connected to said connection station device and for relaying a packet transmitted from said external IP network to said mobile terminal via said connection station device, a plurality of radio base station devices connected to said relay station device and said mobile terminal and for receiving said packet relayed by said relay station device from said relay station device and for transferring to said mobile terminal, and for transferring the packet from said mobile terminal to said relay station device in order to transmit to said external IP network, and a network management unit to make up a VLAN path between said connection station device and said radio base station device, wherein said radio base station where said mobile terminal are connected and said connection station device generates own MAC addresses based on identification information assigned to said mobile terminals as notified from the network management unit;
said network management unit arranges, when said mobile terminal starts handover, a point-to-multipoint VLAN path by adding said new radio base station device to a point-to-point VLAN path between said previous radio base station device where said mobile terminal has been connected before the start of said handover and said connection station device, and said connection station device encapsulates packet received from said external IP network side by adding a new MAC header with a broadcast address for a destination MAC address and with the MAC address of said connection station device for a source MAC address, and adding an identification information of said mobile terminal starting the handover, and transfers the encapsulated packet via said point-to-multipoint VLAN path. With this arrangement, the same packet can be transferred to a plurality of radio base station devices without performing special packet duplication by using efficient tree configuration while using normal layer 2 switch in the relay station device.

Also, according to the preferred aspect of the present invention, the access network system as described above is provided, wherein each MAC address generated at said connection station device and said radio base station where said mobile terminal is connected is processed by mapping to said identification information of said mobile terminal on 1:1 basis and also include a specific ID to indicate said connection station device or said radio base station where said mobile terminal is connected. With this arrangement, when packet can be encapsulated, MAC address of the partner can be automatically generated, and there is no need to use a protocol to inquire MAC address of the partner.

Further, according to the preferred aspect of the present invention, the access network system as described above is provided, wherein said connection station device transfers the encapsulated packet by using a broadcast address to the destination MAC address when a difference between electric field intensity received from said previous radio base station device and electric field intensity received from said new radio base station device is equal to or lower than a predetermined value after said point-to-multipoint VLAN path has been made up by said network management unit, and in other cases, transfers the encapsulated packet by using a unicast address of the radio base station device with high electric field intensity as the destination MAC address. With this arrangement, it is possible to efficiently transfer the packet.

Also, according to the preferred aspect of the present invention, the access network system as described above is provided, wherein said network management unit prunes a branch part of said VLAN path between said connection station device and said previous radio base station device when said handover of said mobile terminal has been completed. With this arrangement, there is no need to maintain VLAN path, which is not required any more.

Also, according to the preferred aspect of the present invention, the access network system as described above is provided, wherein said previous radio base station device deletes said own MAC address corresponding to identification information of said mobile terminal after completion of said handover of said mobile terminal. With this arrangement, there is no need to maintain MAC address, which is not required any more.

Further, according to the preferred aspect of the present invention, the access network system as described above is provided, wherein said connection station device encapsulates packet by adding a MAC header with said unicast MAC address of said radio base station device, where said mobile terminal is connected, as destination MAC address, and said own MAC address as source MAC address, and by adding said identification information corresponding to said mobile terminal to said packet received from said external IP network side except during said handover of said mobile terminal, and transfers said encapsulated packet via said point-to-point VLAN path between said connection station device and said radio base station device where said mobile terminal is connected. With this arrangement, there is no need to perform broadcast transfer except the time during handover, and the load to perform useless processing can be reduced.

Also, according to the preferred aspect of the present invention, a connection station device in the access network system as described above is provided, wherein said access network system comprises a mobile terminal, a connection station device connected with an external IP network to relay the communication between said mobile terminal and said external IP network, to which said mobile terminal belongs, a relay station device connected to said connection station device and for relaying a packet transmitted from said external IP network to said mobile terminal via said connection station device, a plurality of radio base station devices connected to said relay station device and said mobile terminal and for receiving said packet relayed by said relay station device from said relay station device and for transferring to said mobile terminal, and for transferring the packet from said mobile terminal to said relay station device in order to transmit to said external IP network, and a network management unit to make up a VLAN path between said connection station device and said radio base station device(s), wherein said connection station device comprises MAC address generating means for generating a plurality of own MAC addresses based on identification information assigned to said mobile terminal as notified from said network management unit, receiving means for receiving a packet from said external IP network side to said mobile terminal, judging means for judging whether said mobile terminal is during handover or not, encapsulating means for encapsulating packet by adding a new MAC header with a broadcast address for a destination MAC address and with own MAC address generated by said MAC address generating means for source MAC address, and adding an identification information of said mobile terminal starting the handover to said packet received by said receiving means when it is judged that said mobile terminal is during handover by said judging means, and transfer means for transferring said packet encapsulated by said encapsulating means via a point-to-multipoint VLAN path made up by said network management unit between said radio base station device where said mobile terminal has been connected before said handover and own device, and also between said radio base station device where said mobile terminal will be connected after said handover and own device when said mobile terminal starts the handover. With this arrangement, soft handover can be efficiently carried out on a system using VLAN path.

Further, according to the preferred aspect of the present invention, a connection station device in the access network system as described above is provided, wherein said MAC address generating means generates MAC address processed by mapping to said identification information of said mobile terminal on 1:1 basis and also including a specific ID to indicate own device. With this arrangement, MAC address of the partner can be automatically generated at the encapsulation of the packet, and there is no need to use a protocol to inquire MAC address of the partner.

Also, according to the preferred aspect of the present invention, a connection station device in the access network system as described above is provided, wherein said encapsulating means encapsulates packet by adding a MAC header with said unicast MAC address of said radio base station device, where said mobile terminal is connected, as destination MAC address, and said MAC address generated by said MAC address generating means as source MAC address, and by adding said identification information corresponding to said mobile terminal to said packet received by said receiving means when it is judged that said mobile terminal is not during handover by said judging means. With this arrangement, packet can be efficiently transferred.

Further, according to the preferred aspect of the present invention, a connection station device in the access network system as described above is provided, wherein said receiving means receives a packet from said mobile terminal via said relay station device, and said encapsulating means removes the MAC header of said packet from said mobile terminal and the identification information of said mobile terminal, and said transfer means transfers said packet where said MAC header and identification information of said mobile terminal have been removed to said external IP network when it is judged by said judging means that the packet from said mobile terminal received via said relay station device is transmitted to said external IP network via the device itself. With this arrangement, the packet from the mobile terminal can be efficiently transmitted to external IP network.

Also, according to the preferred aspect of the present invention, a radio base station device in the access network system as described above is provided, wherein a mobile terminal, a connection station device connected with an external IP network to relay the communication between said mobile terminal and said external IP network, to which said mobile terminal belongs, a relay station device connected to said connection station device and for relaying a packet transmitted from said external IP network to said mobile terminal via said connection station device, a plurality of radio base station devices connected to said relay station device and said mobile terminal and for receiving said packet relayed by said relay station device and for transferring to said mobile terminal, and for transferring the packet from said mobile terminal to said relay station device in order to transmit to said external IP network, and a network management unit to make up a VLAN path between said connection station device and said radio base station device, wherein said radio base station device comprises MAC address generating means for generating a plurality of own MAC addresses based on identification information assigned to said mobile terminal as notified from said network management unit, receiving means for receiving said packet from said external IP network encapsulated by' said connection station device, judging means for judging whether the destination MAC address of MAC header of said encapsulated packet received by said receiving means is a broadcast address or a unicast address, deleting means for deleting MAC header of said encapsulated packet and identification information of said mobile terminal when said encapsulated packet is judged as a packet having said broadcast address by said judging means and when the identification information of said mobile terminal added to said packet is the same as the identification information notified from said management unit, or when said encapsulated packet is judged as a packet having said unicast address and when said unicast address is the same as one of own MAC addresses corresponding to the identification information of said mobile terminal generated by said MAC address generating means, and transfer means for transferring said packet, where MAC header and portion of identification information of said mobile terminal have been deleted by said deleting means, to said mobile terminal. With this arrangement, packet transfer can be carried out at the radio base station device without paying special attention to the handover.

Further, according to the preferred aspect of the present invention, a radio base station device in the access network system as described above is provided, wherein said MAC address generating means generates MAC address processed by mapping to said identification information of said mobile terminal on 1:1 basis and also including a specific ID to indicate own device. With this arrangement, MAC address of the partner can be automatically generated at the encapsulation of the packet, and there is no need to use a protocol to inquire MAC address of the partner.

Also, according to the preferred aspect of the present invention, a radio base station device in the access network system as described above is provided, wherein said device further comprises encapsulating means for encapsulating packet by adding a MAC header with a MAC address of said connection station device for a unicast destination address and with own MAC address for a source MAC address, and adding an identification information of said mobile terminal, to the packet received by said receiving means and to be sent to said external IP network from said mobile terminal, and said transfer means transfers said packet encapsulated by said encapsulating means to said external IP network via said relay station device. With this arrangement, the packet transmitted from the radio base station device to external IP network can be transferred to the connection station device even on a point-to-multipoint VLAN path.

Further, according to the preferred aspect of the present invention, a packet loss reducing method in the access network system as described above is provided, wherein a mobile terminal, a connection station device connected with an external IP network to relay the communication between said mobile terminal and said external IP network, to which said mobile terminal belongs, a relay station device connected to said connection station device and for relaying a packet transmitted from said external IP network to said mobile terminal via said connection station device, a plurality of radio base station devices connected to said relay station device and said mobile terminal and for receiving said packet relayed by said relay station device and for transferring to said mobile terminal, and for transferring the packet from said mobile terminal to said relay station device in order to transmit to said external IP network, and a network management unit to make up a VLAN path between said connection station device and said radio base station device, wherein said method comprising the steps of generating a plurality of own MAC addresses based on identification information assigned to said mobile terminal as notified from said network management unit by said radio base station where said connection station device and said mobile terminal are connected, constituting a point-to-multipoint VLAN path where said new radio base station device where said mobile terminal will be connected is added to a point-to-point VLAN path between said previous radio base station device where said mobile terminal has been connected before starting said handover and said connection station device, by said network management unit when said mobile terminal starts the handover, and said connection station device encapsulates packet received from said external IP network side by adding a MAC header with a broadcast address for a destination MAC address and with MAC address of said connection station device for source MAC address, and by adding an identification information of said mobile terminal starting the handover, and transfers the encapsulated packet via said point-to-multipoint VLAN path. With this arrangement, the same packets can be transferred to a plurality of radio base station devices without performing special packet duplication by using efficient tree configuration even when normal layer 2 switch in the relay station device is used.

Also, according to the preferred aspect of the present invention, a packet loss reducing method in the access network system as described above is provided, wherein each MAC address generated at said connection station device and said radio base station where said mobile terminal is connected is processed by mapping to said identification information of said mobile terminal on 1:1 basis and also includes a specific ID to indicate said connection station device or said radio base station where said mobile terminal is connected. With this arrangement, MAC address of the partner can be automatically generated at the encapsulation of packet, and there is no need to use a protocol to inquire MAC address of the partner.

Further, according to the preferred aspect of the present invention, a packet loss reducing method in the access network system as described above is provided, wherein said method further comprising the steps of transferring said encapsulated packet by using broadcast address for the destination address when a difference between electric field intensity received from said previous radio base station device and electric field intensity received from said new radio base station device is equal to or lower than a predetermined value after said point-to-multipoint VLAN path has been made up by said network management unit, and in other cases, transfers the encapsulated packet by using unicast address of the radio base station device with high electric field intensity as the destination address. With this arrangement, packet can be efficiently transferred.

Also, according to the preferred aspect of the present invention, a packet loss reducing method in the access network system as described above is provided, wherein said network management unit prunes a branch part of said VLAN path between said connection station device and said previous radio base station device when said handover of said mobile terminal has been completed. With this arrangement, there is no need to maintain VLAN path, which is not required any more.

Further, according to the preferred aspect of the present invention, a packet loss reducing method in the access network system as described above is provided, wherein said previous radio base station device deletes own MAC address corresponding to identification information of said mobile terminal after completion of said handover of said mobile terminal. With this arrangement, there is no need to maintain VLAN path, which is not required any more.

Also, according to the preferred aspect of the present invention, a packet loss reducing method in the access network system as described above is provided, wherein said connection station device encapsulates packet by adding a MAC header with said unicast MAC address of said radio base station device, where said mobile terminal is connected, as destination MAC address, and said own MAC address as source MAC address, and by adding said identification information corresponding to said mobile terminal, to said packet received from said external IP network side except during said handover of said mobile terminal, and transfers said encapsulated packet via said point-to-point VLAN path between said connection station device and said radio base station device where said mobile terminal is connected. With this arrangement, there is no need to perform broadcast transfer except the time during handover, and the load to perform useless processing can be reduced.

The access network system, the connection station device, the radio base station device, and the packet loss reducing method according to the present invention have the arrangement as described above. As a result, the packet loss during handover of the mobile terminal can be reduced and wasteful consumption of the band can be eliminated.

### BRIEF DESCRIPTION OF THE DRAWINGS

Fig. 1 is a block diagram to show an arrangement of an access network system in an embodiment of the present invention;
Fig. 2 is a block diagram to explain management of VLAN path by a network management unit in the access network system in the embodiment of the present invention;
Fig. 3 is a block diagram to explain packet transfer before handover of a mobile terminal in the access network system of the embodiment of the present invention;
Fig. 4 is a block diagram to explain packet transfer during handover of a mobile terminal in the access network system of the embodiment of the present invention;
Fig. 5 is a block diagram to explain packet transfer after handover of a mobile terminal in the access network system of the embodiment of the present invention;
Fig. 6A is a drawing to explain a packet to be transferred to the mobile terminal at normal time and not during handover in a connection station device according to the embodiment of the present invention;
Fig. 6B is a drawing to explain a packet to be transferred to the mobile terminal during handover in a connection station device according to the embodiment of the present invention;
Fig. 6C is a drawing to explain a packet to be transferred to ISP device of ISP network in a radio base station device in the embodiment of the present invention;
Fig. 7A is a drawing of a format of MAC address of a connection station device to be added at the encapsulation in an access network system, a connection station device, a radio base station device, and a packet reducing method in the embodiment of the present invention;
Fig. 7B is a drawing of a format of MAC address of a radio base station device to be added at the encapsulation in an access network system, a connection station device, a radio base station device, and a packet reducing method in the embodiment of the present invention;
Fig. 8 is a block diagram to explain an arrangement of a connection station device in the embodiment of the present invention;
Fig. 9 is a flow chart to explain transfer processing flow of a packet received from an ISP device in the connection station device in the embodiment of the present invention;
Fig. 10 is a flow chart to explain transfer processing flow of a packet received from a relay station in the connection station device of the embodiment of the present invention;
Fig. 11 is a block diagram to explain an arrangement of a radio base station device in the embodiment of the present invention;
Fig. 12 is a flow chart to explain transfer processing flow of a packet received from a relay station device in the radio base station device in the embodiment of the present invention;
Fig. 13 is a flow chart to explain transfer processing flow of a packet received from a mobile terminal in the radio base station device in the embodiment of the present invention;
Fig. 14 is a drawing to show a protocol stack of a transfer plane in the access network system of the embodiment of the present invention;
Fig. 15 is a sequence chart of route change during the moving of the mobile terminal in a conventional example;
Fig. 16 is a drawing to explain soft handover in a conventional mobile IP; and
Fig. 17 is a drawing to explain soft handover using a conventional type label.

### BEST MODE FOR CARRYING OUT THE INVENTION

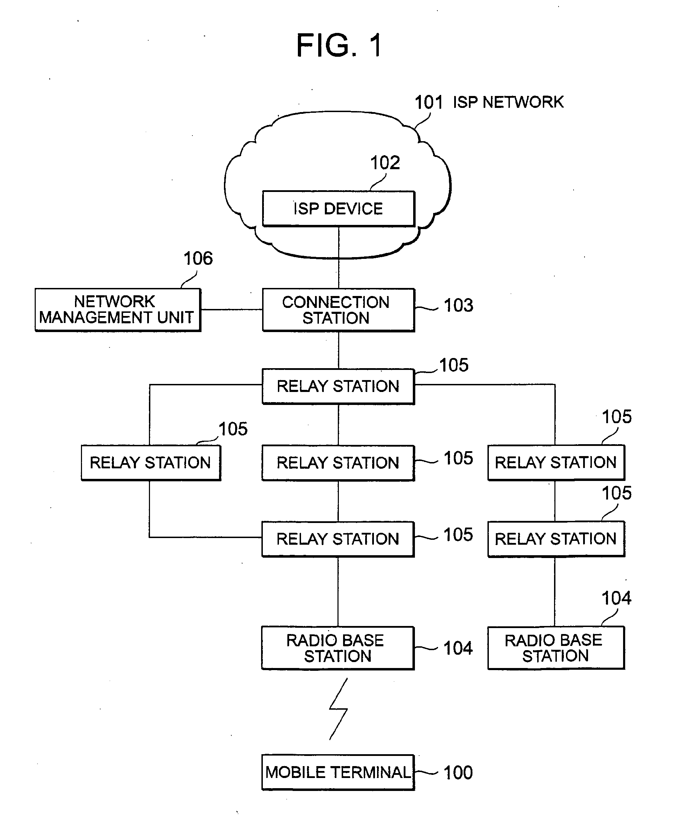

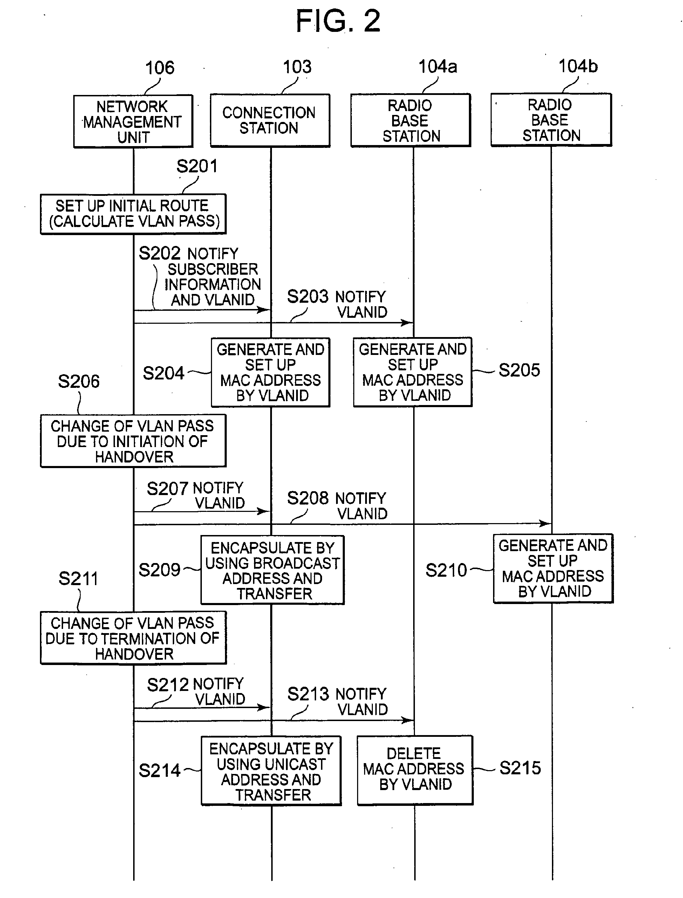

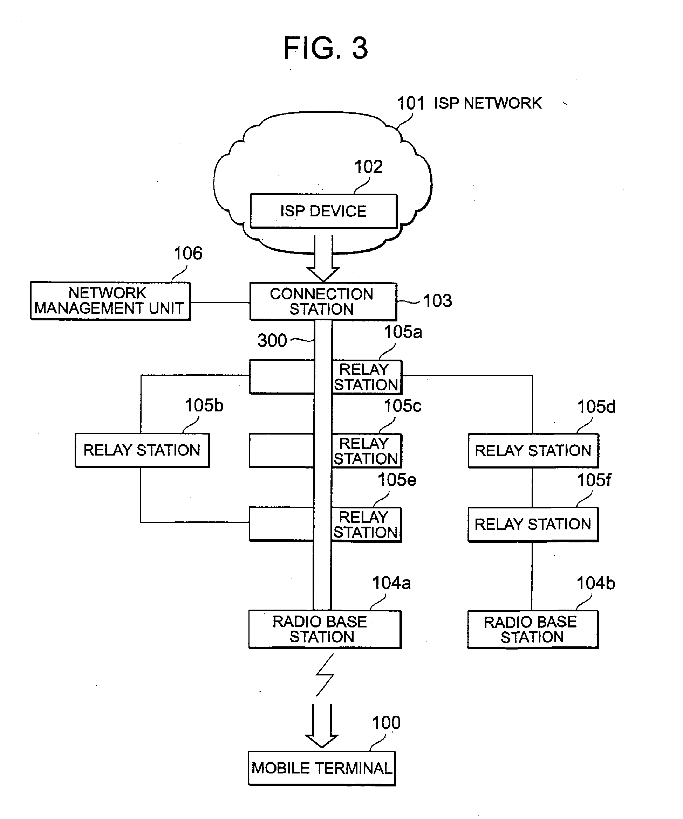

Description will be given below on an access network system, a connection station device, a radio base station device, and a packet loss reducing method in the embodiment of the present invention by referring to Fig. 1 to Fig. 14. Fig. 1 is a block diagram to show an arrangement of an access network system in an embodiment of the present invention. Fig. 2 is a block diagram to explain management of VLAN path by a network management unit in the access network system in the embodiment of the present invention. Fig. 3 to Fig. 5 each represents a block diagram to explain packet transfer before, during, and after handover of a mobile terminal in the access network system according to the embodiment of the present invention respectively.

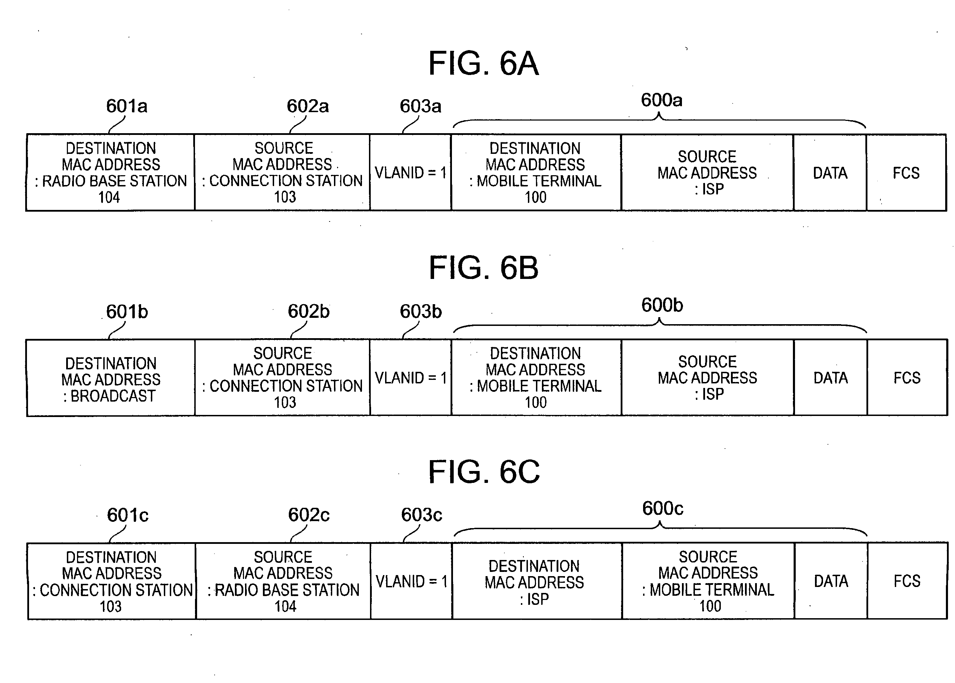

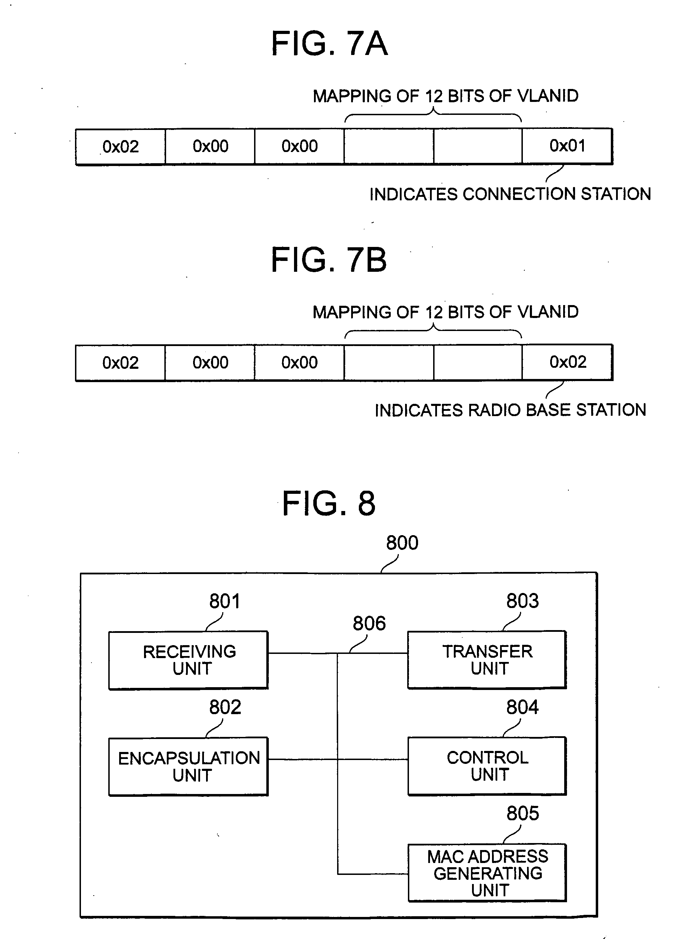

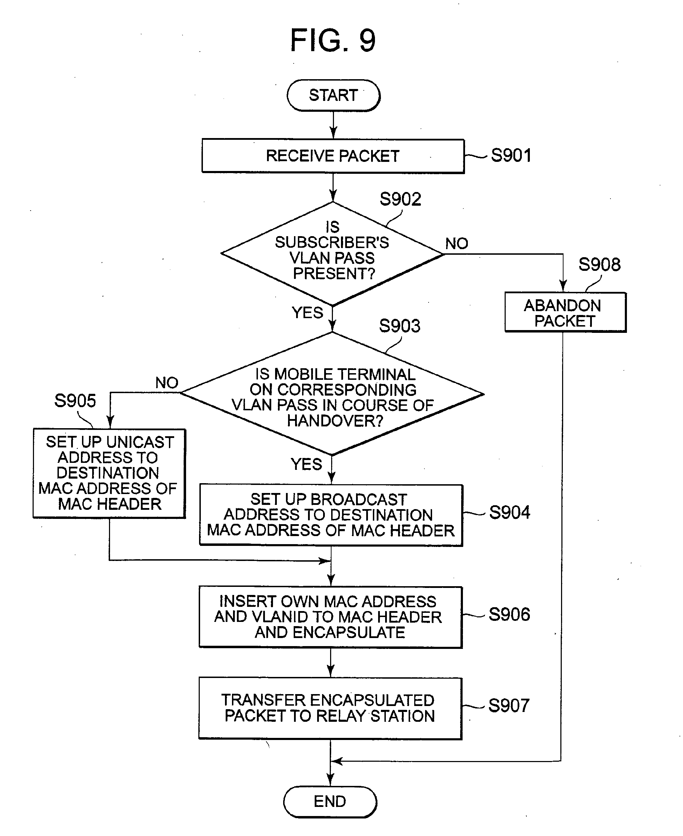

Fig. 6A to Fig. 6C each represents a drawing to explain an encapsulated packet to be used in the access network system, the connection station device, the radio base station device, and the packet loss reducing method in the embodiment of the present invention. Fig. 7A and Fig. 7B each represents a drawing to explain a format of MAC address of the connection station device and the radio base station device to be added at the encapsulation in the access network system, the connection station device, the radio base station device, and the packet loss reducing method in the embodiment of the present invention. Fig. 8 is a block diagram to explain an arrangement of the connection station device according to the embodiment of the present invention. Fig. 9 is a flow chart to explain transfer processing flow of a packet received from an ISP device in the connection station device according to the embodiment of the present invention.

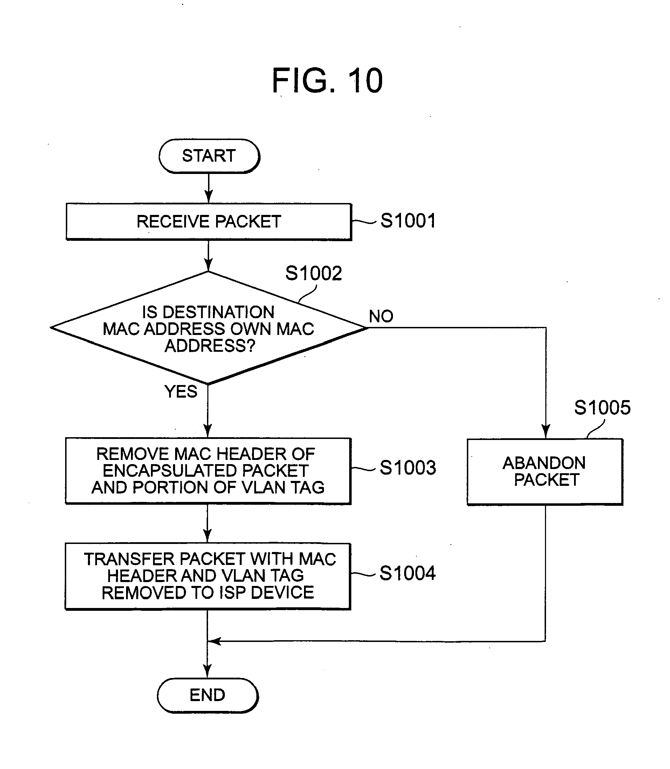

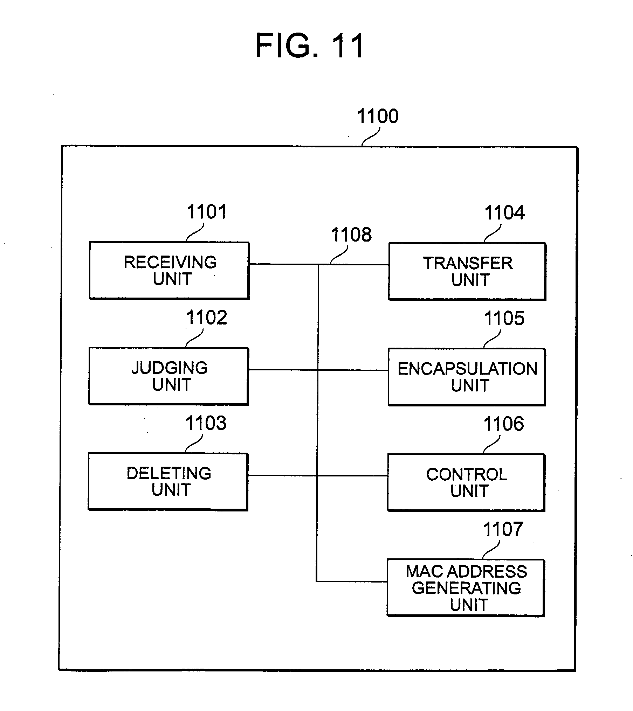

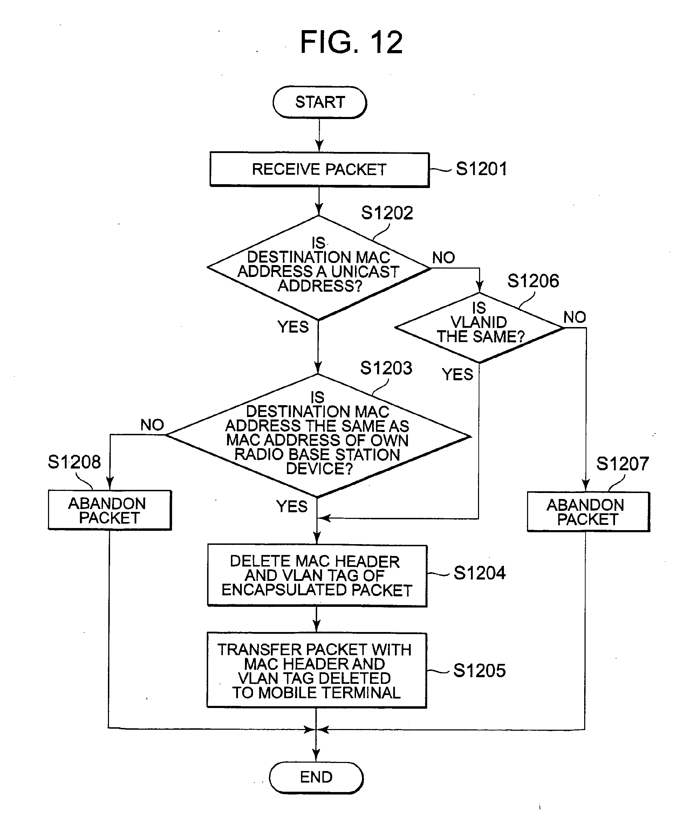

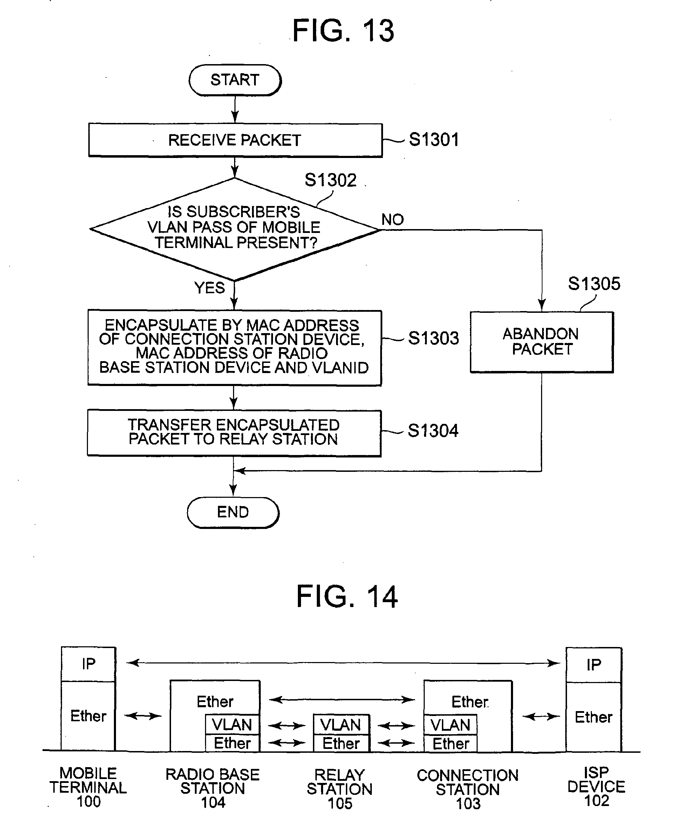

Fig. 10 is a flow chart to explain transfer processing flow of a packet received from a relay station device in the connection station device in the embodiment of the present invention. Fig. 11 is a block diagram to explain an arrangement of the radio base station device in the embodiment of the present invention. Fig. 12 is a flow chart to explain transfer processing flow of a packet received from the relay station device in the radio base station device in the embodiment of the present invention. Fig. 13 is a flow chart to explain transfer processing flow of a packet received from the mobile terminal in the radio base station device according to the embodiment of the present invention. Fig. 14 is a drawing to show a protocol stack of transfer plane in the access network system of the embodiment of the present invention.

First, description will be given on the access network system in the embodiment of the invention referring to Fig. 1. As shown in Fig. 1, the access network system comprises a mobile terminal 100, a connection station 103 to be connected to an ISP device 102 of an ISP network 101 to relay between the mobile terminal 100 and the ISP network 101, to which the mobile terminal 100 belongs, a radio base station 104 located between the mobile terminal 100 and the connection station 103 and to be connected to the mobile terminal 100, relay stations 105 for connecting the connection station 103 and the radio base station 104, and a network management unit 106 for forming a tunnel between the connection station 103 and the radio base station 104. In the access network system, a network between the connection station 103 and the radio base station 104 is called an access network.

The access network is a network to connect the mobile terminal 100 with the ISP network 101. A subscriber of the mobile terminal 100 can connect individually to an ISP network 101 as desired. The access network logically comprises two planes. One is a transfer plane to transfer the packet from the mobile terminal 100 to the ISP network 101, and the other is a control plane to execute supervision and management of the access network. The transfer plane comprises a net using tunnel technique to transmissively transmit a layer 2 (data link layer) network in OSI model. On the other hand, the control plane comprises a layer 3 (network layer) in OSI model. It makes up an IP net closed within the access network and executes transmission of control information between devices by normal IP routing. The network management unit 106 as described above carries out management of the entire access network.

The network management unit 106 primarily manages VLAN route of the access network (hereinafter also called "VLAN path"). Here, description will be given on management of VLAN route by the network management unit 106 referring to Fig. 2. As shown in Fig. 2, the network management unit 106 identifies topology of the access network at the startup of the access network and calculates the VLAN path to connect the radio base station 104 with the connection station 103 for the setting of initial route (Step S201), and notifies subscriber information and VLANID of the mobile terminal 100 and VLANID to the connection station 103 and the radio base station 104a, to which the mobile terminal 100 is connected before handover by using the control plane (Steps S202 and S203). In this case, the VLAN path calculated by the network management unit 106 is calculated for each mobile terminal 100. Also, VLANID is assigned to the mobile terminal 100 as an identification information. As a result, a corresponding VLANID can be added to each calculated VLAN path. To match the VLANID thus notified, the connection station 103 and the radio base station 104a generate and set up MAC address to be used in its access network (Steps S204 and S205). That is, VLANID and the generated MAC address match each other on 1:1 basis.

When the handover of the mobile terminal 100 is started, the network management unit 106 changes to a point-to-multipoint VLAN path as described later including the radio base station 104b of mobile destination (Step S206), and notifies VLANID corresponding to the mobile terminal 100 to the connection station 103 and to the radio base station 104b of mobile destination (Steps S207 and S208). Then, the connection station 103 performs encapsulation using a broadcast address (to be described later), and the encapsulated packet is transferred to the mobile terminal 100 (Step S209). The radio base station 104b of mobile destination generates and sets up MAC address to be used in own access network to match the notified VLANID (Step S210). When the handover of the mobile terminal 100 is terminated, the change of VLAN path occurs (Step S211). Then, the network management unit 106 prepares point-to-multipoint VLAN path (to be described later) between the radio base station 104b and itself and notifies the VLANID corresponding to the mobile terminal 100 to the connection station 103 and to the radio base station 104a before moving (Steps S212 and S213). As a result, the connection station 103 performs encapsulation by using a unicast address (to be described later) from the broadcast address and transfers the encapsulated packet to the mobile terminal 100 (Step S214). The radio base station 104a before moving deletes the MAC address in use by the notified VLANID (Step S215).

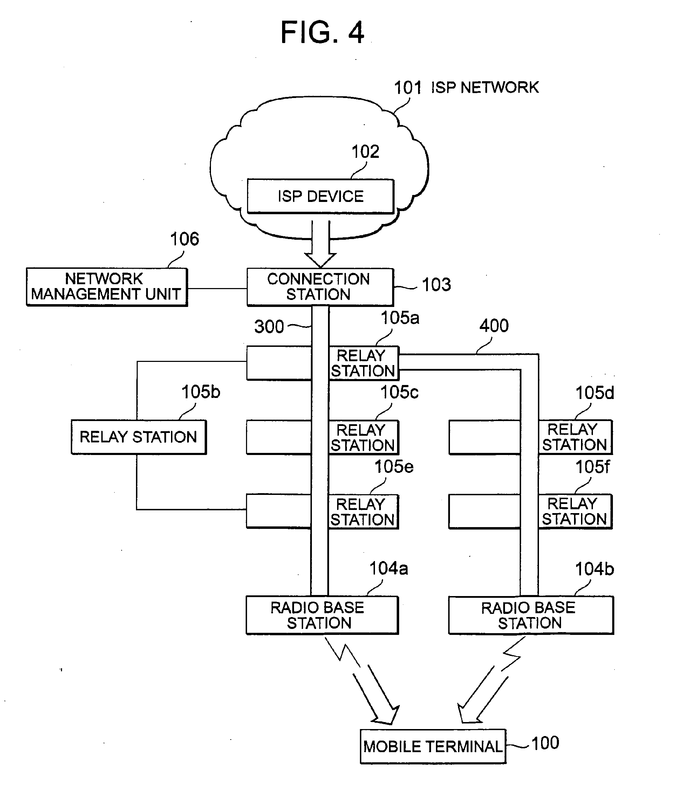

Next, description will be given on packet transfer during handover of the mobile terminal in the access network system according to the embodiment of the present invention by referring to Fig. 3 to Fig. 5. Before the mobile terminal 100 carries out handover, as shown in Fig. 3, the mobile terminal 100 transmits and receives packet to and from the ISP device 102 of the ISP network 101 by a VLAN path 300, which is set as a point-to-multipoint route (e.g. VLANID = 1). In the following, the VLAN path is also called "tunnel". When the mobile terminal 100 starts handover, as shown in Fig. 4, the network management unit 106 makes up point-to-multipoint VLAN paths 300 and 400 to the radio base station 104a before moving of the mobile terminal 100 and to the radio base station 104b after moving. In this case, the packet from the ISP device 102 to the mobile terminal 100 is encapsulated by MAC header with broadcast address as destination address and by VLAN tag in the connection station 103. The encapsulation is also carried out at the time other than during handover. Encapsulation will be described later. The connection station 103 transfers the encapsulated packet with broadcast address as the destination address to the relay station 105a. The relay station 105a transfers the encapsulated packet with destination address as broadcast address to the relay stations 105c and 105d. The connection station 103 does not necessarily perform encapsulation by MAC header with broadcast address as destination at the same time when point-to multipoint VLAN paths 300 and 400 are made up by the network management unit 106, and it may be so arranged that encapsulation may be performed by MAC header of unicast address as it is and the encapsulated packet may be transferred to the relay station 105a by changing to MAC header of broadcast address when the difference between the intensity of electric wave received from the radio base station 104a before moving and the intensity of electric wave received from the radio base station 104b of mobile destination reaches a predetermined value or a lower value. As a result, the starting of soft handover can be controlled by simply making up the point-to-multipoint VLAN path in advance and by changing MAC address to be encapsulated at the timing as necessary. There is no possibility of undergoing the influence of control delay to make up the point-to-multipoint VLAN path, and the duplication of packet to a plurality of routes can be efficiently controlled and useless band consumption can be eliminated.

Here, description will be given on the encapsulated packet to be used in the access network system, the connection station device as described later, the radio base station device as described later and the packet loss reducing method in the embodiment of the present invention by referring to Fig. 6A to Fig. 6C. First, description will be given on the packet to be transferred to the mobile terminal 100 at normal time - not during handover - at the connection station 103 by referring to Fig. 6A. As shown in Fig. 6A, the connection station 103 sets up MAC address to match VLANID of the mobile terminal 100 of the radio base station 104 with unicast address at a destination MAC address 601a. Then, MAC address of the connection station 103 itself is inserted to a source MAC address 602a and VLANID = 1 of the corresponding mobile terminal 100 is inserted to a VLANID tag 603a, and these are added to the packet 600a received from the ISP device 102 of the ISP network 101 and are encapsulated. The portions of the destination MAC address 601a and the source MAC address 602a added to the packet 600a are also called MAC header. In the following, these portions are also called MAC header for the destination MAC address 601b, the source MAC address 602b, the destination MAC address 601c, and the source MAC address 602c.

The connection station 103 transfers the packet thus encapsulated. Here, the expression VLANID = 1 means that the VLANID assigned to the mobile terminal 100 is 1, for instance. Next, description will be given on the packet to be transferred to the mobile terminal 100 during handover at the connection station 103 by referring to Fig. 6B. As shown in Fig. 6B, the connection station 103 sets up a broadcast address to the destination MAC address 601b, and MAC address of the connection station 103 is inserted to the source MAC address 602b, and VLANID = 1 of the corresponding mobile terminal 100 is inserted to the VLAN tag 603b. Then, these are added to the packet 600b received from the ISP device 102 of the ISP network 101 and are encapsulated.

Then, the connection station 103 transfers the encapsulated packet. Next, description will be given on the packet transferred to the ISP device 102 of the ISP network 101 at the radio base station 104 by referring to Fig. 6C. As shown in Fig. 6C, the radio base station 104 sets up MAC address of the connection station 103, which is a unicast address, to the destination MAC address 601c. Then, MAC address of the radio base station 104 itself is inserted to the source MAC address 602c, and VLANID = 1 of the corresponding mobile terminal 110 is inserted to VLAN tag 603c, and these are added to the packet 600c received from the mobile terminal 100 and are encapsulated. Then, the radio base station 104 transfers the encapsulated packet.

In this case, with regard to the packet transmission from the radio base station 104 to the ISP device 102 of the ISP network 101, the packet is encapsulated and transferred with the same unicast address even during the handover. For this reason, even when it is the point-to-multipoint VLAN path, the packet transmitted from the radio base station 104 to the ISP device 102 of the ISP network 101 is transferred to the connection station 103, and it is not transferred to the other radio base station 104 in almost all cases. However, regarding the MAC address learning at the relay station 105, if MAC address of the matching connection station 103 is erased from the learning table by timer, the packet may be copied and transferred to the connection station 103 and the other radio base station 104 at the relay station 105. Even in this case, however, it can be confirmed that it is the packet addressed to the connection station 103 at the moment when it is checked whether the destination MAC address is registered as own MAC address or not at the radio base station 104, and it is not transferred to the mobile terminal 100.

Turning back to Fig. 4, the relay station 105a and the relay stations 105c to 105f can transfer the packet to the mobile terminal 100 encapsulated as broadcast in the same manner as normal broadcast frame, and it can be transferred to the radio base stations 104a and 104b.

The access network system in the embodiment of the present invention is characterized in that packet can be transferred from the relay station 105a to the relay station 105f by using normal Ethernet (registered trademark) switch. Also, during handover, regarding the unicast packet addressed to the mobile terminal 100, a broadcast address is inserted to the destination MAC address and it is encapsulated when VLANID to indicate the path to the radio base station 104 where the mobile terminal 100 is connected is inserted at the connection station 103. In so doing, even when it is a unicast address, it can be handled as a broadcast address within the access network only during handover, and the same packet can be transferred to a plurality of radio base stations. The encapsulated packets are converted to normal packets at the radio base station 104 (remove MAC header and VLAN tag added at the connection station 103) and are transmitted to the mobile terminal 100. In this respect, the mobile terminal 100 can receive the packet from two radio base stations 104a and 104b as normal Ethernet (registered trademark) frame. Even when the radio base station 104 is changed during handover, the packet can be continuously received. However, it is not essential to output the same packet from two radio base stations, and one radio base station may be selected between the mobile terminal 100 and the radio base stations 104a and 104b. Also, for the destination MAC address before handover as shown in Fig. 3, the address to match VLANID of the mobile terminal 100 on 1:1 basis is used. As a result, it is handled as the transfer of unicast packet except during handover, and useless band consumption can be eliminated.

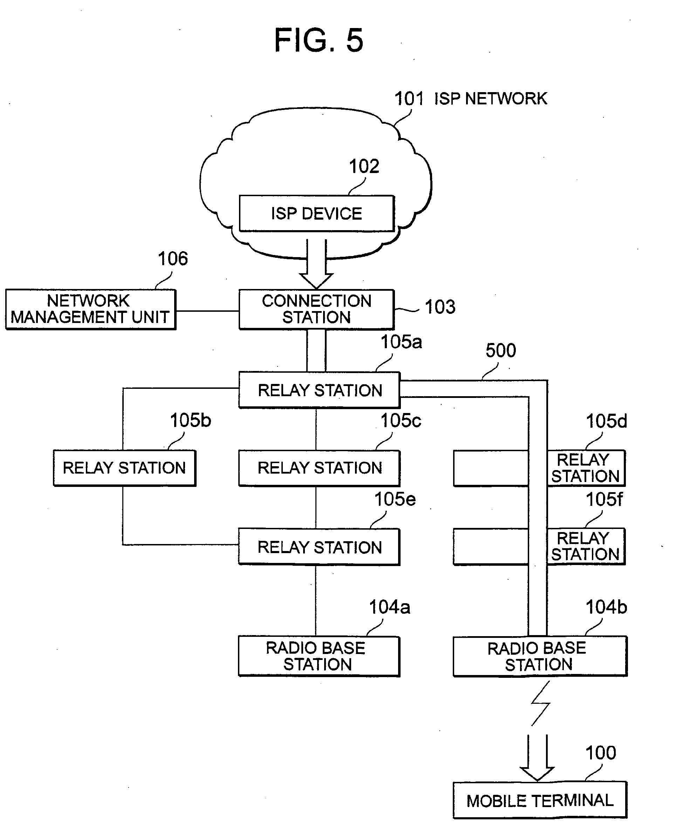

When handover is terminated, as shown in Fig. 5, the point-to-multipoint VLAN path 500 is made up between the mobile terminal 100 connected to the radio base station 104b of mobile destination and the ISP device 102 of the ISP network 101, and the packet can be transmitted and received.

Next, description will be given on a format of MAC address of the connection station 103 and the radio base station 104 to be added during the encapsulation as described above by referring to Fig. 7A and Fig. 7B. The format of MAC address of the connection station 103 shown in Fig. 7A and the format of MAC address of the radio base station 104 shown in Fig. 7B each comprises 48 bits respectively. By turning the leading 8 bits to "0 x 02", it can be used as a private (closed) MAC address space. The present invention is characterized in that 12 bits of the value of the VLANID currently used at the connection station 103 and the radio base station 104 are processed by mapping to MAC address respectively, and the lower 8 bits are fixed to 0 × 01 at the connection station 103 and to 0 × 02 at the radio base station 104. Specifically, VLANID and MAC address match each other on 1:1 basis. The path of the subscriber of individual mobile terminal 100 is differentiated by VLANID. By performing mapping on the VLANID and the MAC address used in the access network on 1:1 basis, the address of the connection station 103 and the radio base station 104, which are automatically turned to edges if only VLANID is managed and set up, can be determined and autonomously set by each device.

In the meantime, in the operation of the access network system in the embodiment of the present invention, it is described that the connection station 103 and the radio base station 104 are operated respectively. However, what is actually operated is processed by the devices, which are present in the connection station 103 and the radio base station 104. In this respect, description will be given below on a concrete arrangement and operation of the connection station device of the embodiment of the present invention in the connection station 103 and the radio base station device of the embodiment of the present invention in the radio base station 104 by referring to Fig. 8 to Fig. 13.

First, description will be given on an arrangement of the connection station device in the embodiment of the present invention by referring to Fig. 8. As shown in Fig. 8, a connection station device 800 comprises a receiving unit 801, an encapsulation unit 802, a transfer unit 803, a control unit 804, and a MAC address generating unit 805. These are connected with each other via a bus 806. The MAC address generating unit 805 generates MAC address of the connection station device 800 according to an identification information assigned to the mobile terminal 100 as notified from the network management unit 106. In this case, the identification information is VLANID as described above. The receiving unit 801 primarily receives packet from the ISP device 102 and the relay station 105 and receives control instruction from the network management unit 106. Except the time of handover by the mobile terminal 100, the encapsulation unit 802 sets up a MAC address to match VLANID of the mobile terminal 100 of the radio base station 104, which is a unicast address, to the destination MAC address 601a as explained in connection with Fig. 6A, sets up MAC address of the connection station device 800 itself to the source MAC address 602a, inserts the corresponding VLANID of the mobile terminal 100 to the VLAN tag 603a, and adds these information to the packet 600 received from the ISP device 102 via the receiving unit 801 and encapsulates the packet. Here, MAC address of the radio base station 104 to be set at the destination MAC address 601a is automatically generated by using VLANID.

On the other hand, when the mobile terminal 100 starts the handover, the encapsulation unit 802 sets up broadcast address to the destination MAC address 601b as explained in Fig. 6B, inserts MAC address of the connection station device 800 itself to the source MAC address 602b and inserts the corresponding VLANID of the mobile terminal 100 to the VLANID tag 603b, and adds these information to the received packet 600b received from the ISP device 102 via the receiving unit 801 and encapsulates them. Also, the encapsulation unit 802 removes MAC header and VLAN tag added to the packet transmitted from the mobile terminal 100 to the encapsulated packet received from the relay station 105 via the receiving unit 801.

The transfer unit 803 transfers the packet encapsulated by the encapsulation unit 802 to the relay station 105 or transfers the packet, which the encapsulation unit 802 has received from the relay station 105 via the receiving unit 801 and from which MAC header portion and VLAN tag have been removed from the encapsulated packet, to the ISP device 102. Also, control instruction received from the unit management unit 106 via the receiving unit 801 is transferred to the relay station 105. The control unit 804 performs processing and operation necessary for adequately transferring the packet received at the receiving unit 801. Concrete processing and operation will be explained in connection with the flow chart of packet transfer processing flow as shown in Fig. 9 and Fig. 10. The receiving unit 801, the encapsulation unit 802, the transfer unit 803, the control unit 804, and the MA address generating unit 805 correspond to a CPU, for instance. A control program for controlling the operation of the receiving unit 801, the encapsulation unit 802, the transfer unit 803, the control unit 804, and the MAC address generating unit 805 is stored in a predetermined storage region (not shown) of the connection station device 800. This storage region corresponds, for instance, to HDD, ROM, RAM, etc. Also, the connection station device 800 has an interface (not shown) to perform communication with outside.

Next, description will be given on transfer processing flow of the packet received by the connection station device 800 by referring to Fig. 9 and Fig. 10. First, description will be given on transfer processing flow of the packet received from the ISP device 102 by referring to Fig. 9. The receiving unit 801 receives a packet from the ISP device 102 (Step S901). The control unit 804 retrieves VLAN path of subscriber of the mobile terminal 100 from destination MAC address of the packet received by the receiving unit 801 and judges whether it is present or not (Step 902). Here, for the retrieval of VLAN path, the connection station device 800 has a table for the matching of the subscriber with VLANID (VLAN path) in advance. This table is stored in a predetermined storage region of the connection station device 800.

When it is judged that VLAN path is present, the control unit 804 judges whether the mobile terminal 100 on the corresponding VLAN path is during handover or not (Step S903). When the control unit 804 judges that the mobile terminal 100 on the corresponding VLAN path is during handover, the encapsulation unit 802 sets up a broadcast address to destination MAC address of MAC header used in encapsulation (Step S904). On the other hand, when the control unit 804 judges that the mobile terminal 100 on the VLAN path is not during handover, the encapsulation unit 802 sets up a unicast address to destination,MAC address of MAC header used in encapsulation (Step S905).

The encapsulation unit 802 inserts its own MAC address to the source MAC address of MAC header where destination MAC address is set up and inserts VLANID to the VLAN tag, and encapsulates (Step S906), and the transfer unit 803 transfers the encapsulated packet to the relay station 105 (Step S907). When the control unit 804 judges that VLAN path is not present in Step S902, the packet is abandoned (Step S908).

Next, description will be given on transfer processing flow of the packet received from the relay station 105 by referring to Fig. 10. As shown in Fig. 10, the receiving unit 801 receives the packet from the relay station 105 (Step S1001). The control unit 804 judges whether destination MAC address of MAC header of the packet received by the receiving unit 801 and explained in Fig. 6C is its own MAC address or not (Step S1002). When the control unit 804 judges that the destination MAC address is its own MAC address, the encapsulation unit 802 removes portions of MAC header and VLAN tag of the encapsulated packet (Step S1003). The transfer unit 803 transfers the packet, from which MAC header and VLAN tag have been removed, to the ISP device 102 (Step S1004). In case the control unit 804 judges that the destination MAC address is not its own MAC address in Step S1002, the packet is abandoned (Step S1005).

Next, description will be given on an arrangement of a radio base station device in the embodiment of the present invention referring to Fig. 11. As shown in Fig. 11, a radio base station device 1100 comprises a receiving unit 1101, a judging unit 1102, a deleting unit 1103, a transfer unit 1104, an encapsulation unit 1105, a control unit 1106, and a MAC address generating unit 1107. These are connected to each other by a bus 1108 respectively. The MAC address generating unit 1107 generates MAC address of the radio base station device 1100 based on an identification information assigned to the mobile terminal 100 as notified from the network management unit 106. The receiving unit 1101 primarily receives the encapsulated packet from the relay station 105 or receives packet from the mobile terminal 100. The judging unit 1102 judges whether the destination MAC address embedded in MAC header of the encapsulated packet received from the relay station 105 by the receiving unit 1101 is a broadcast address or a unicast address.

The deleting unit 1103 deletes MAC header and VLAN tag of the encapsulated packet when the packet encapsulated by the judging unit 1102 is judged as a packet having broadcast address and a predetermined condition is met or when the encapsulated packet is a packet having unicast address and a predetermined condition is met. Here, the predetermined condition to be added when it is judged as a packet having broadcast address is a condition that VLANID of VLAN tag of the received and encapsulated packet is the same as the VLANID stored in the storage region (not shown) of the radio base station device 1100. The VLANID stored in a predetermined storage region (not shown) of its own radio base station device 1100 is a VLANID notified from the network management unit 106 as described above. Also, the predetermined condition to be added when it is judged as a packet having unicast address is a condition that the destination MAC address of MAC header of the received encapsulated packet is the same as the MAC address of its own radio base station device 1100.

The transfer unit 1104 transfers the packet, in which MAC header has been deleted by the deleting unit 1103, to the mobile terminal 100 or transfers the packet encapsulated by the encapsulation unit 1105 as described later to the relay station 105. The encapsulation unit 1105 sets up a unicast address (MAC address of the connection station 103) to the destination MAC address 601c as explained in Fig. 6C and encapsulates it together with the packet received from the mobile terminal 110 via the receiving unit 1101. The control unit 1106 performs processing and operation as required when the encapsulated packet received by the receiving unit 1101 and non-encapsulated packet are to be adequately transferred. Concrete processing and operation will be described in transfer processing flow of the packet in Fig. 12 and Fig. 13. The receiving unit 1101, the judging unit 1102, the deleting unit 1103, the transfer unit 1104, the encapsulation unit 1105, the control unit 1106, and the MAC address generating unit 1107 correspond to a CPU, for instance. A control program to control operations of the receiving unit 1101, the judging unit 1102, the deleting unit 1103, the transfer unit 1104, the encapsulation unit 1105, the control unit 1106, and the MAC address generating unit 1107 is stored in a predetermined storage region (not shown) of the radio base station device 1100. This storage region corresponds to HDD, ROM, RAM, etc., for instance. The radio base station device 1100 has an interface (not shown) to perform communication with outside.

Next, description will be given on transfer processing flow of a packet received by the radio base station device 1100 by referring to Fig. 12 and Fig. 13. First, transfer processing flow of the packet received from the relay station 105 will be described by referring to Fig. 12. The receiving unit 1101 receives the packet encapsulated by the connection station device 800 via a tunnel formed by the network management unit 106 between the connection station device 800 and the radio base station device 1100 (Step S1201). The judging unit 1102 judges whether the address inserted in the destination MAC address of MAC header of the packet received and encapsulated by the receiving unit 1101 is a broadcast address or a unicast address (Step S1202).

When the destination MAC address is judged as a unicast address by the judging unit 1102, the deleting unit 1103 judges whether the address of the destination MAC address is the same as the MAC address stored in the predetermined storage region (not shown) of its own radio base station device 1100 or not (Step S1203). When it is judged that it is the same as the MAC address stored in the predetermined storage region, MAC header and VLAN tag of the encapsulated packet are deleted (Step S1204). The transfer unit 1104 transfers the packet, from which MAC header and VLAN tag have been deleted by the deleting unit 1103, to the mobile terminal 100 (Step S1205).

On the other hand, when the destination MAC address is judged as a broadcast address by the judging unit 1102 in Step S1202, the deleting unit 1103 judges whether VLANID of VLAN tag of the received and encapsulated packet is the same as the VLANID stored in a predetermined storage region (not shown) of its own radio base station device 1100 or not (Step S1206). When it is judged that it is the same as the VLANID stored in the predetermined storage region, it is shifted to Step S1204. When it is judged in Step S1206 that it is not the same as the VLANID stored in the predetermined storage region, the control unit 1106 abandons the corresponding packet (Step S1207). If it is judged in Step S1203 that it is not the same as the MAC address stored in the predetermined storage region, the control unit 1106 abandons the corresponding packet (Step S1208).

Next, description will be given on transfer processing flow of the packet received from the mobile terminal 100 by referring to Fig. 13. As shown in Fig. 13, the receiving unit 1101 receives a packet addressed to the ISP device 102 from the mobile terminal 100 (Step S1301). Based on the source MAC address of the received packet, the control unit 1106 retrieves VLAN path of the subscriber of the mobile terminal 100 and judges whether it is present or not (Step S1302). In this case, for the retrieval of VLAN path, the radio base station device 1100 has a table to match the subscriber with VLANID (VLAN path) in advance. This table is stored in a predetermined storage region (not shown) of the radio base station device 1100. When it is judged that the VLAN path is present by the control unit 1106, the encapsulation unit 1105 inserts MAC address of the connection station device 800 to the destination MAC address of MAC header, inserts MAC address of the radio base station device 1100 to the source MAC address of MAC header, and inserts the corresponding VLANID to VLAN tag and encapsulates them (Step S1303). The transfer unit 1104 transfers the packet encapsulated by the encapsulation unit 1105 to the relay station 105 (Step S1304). In this case, if it is judged that the VLAN path is not present by the control unit 1106 in Step S1302, the control unit 1106 abandons the packet (Step S1305).

In this case, network architecture of the access network system in the embodiment of the present invention has a configuration of a control plane by IP network and a transfer plane by the layer 2 similarly to the access network configuration model in "A Review of Mobility Control in Wide Area Ethernet (Registered Trademark)" of the Non-Patent Document 1 in the prior art. Fig. 14 shows a protocol stack of a transfer plane in the access network system of the embodiment of the present invention. The access network system of the embodiment of the present invention has a protocol stack of a transfer plane different from that of the prior art. Not only VLAN tag but also MAC header with its own MAC address used in the access network are added between the radio base station 104 and the connection station 103, and a user packet (a packet before adding) is encapsulated by using MAC header and VLAN tag. In this method, the destination MAC address in own MAC address is used as a broadcast address or a unicast address, soft handover in the layer 2 can be efficiently achieved while using normal Ethernet (registered trademark) in the relay station 105.
The functional blocks used in the description of the embodiment described above can be typically achieved as LSI, i.e. an integrated circuit. These may be turned to one chip individually or into one chip including a part or all. Here, it is referred as LSI, while it may be called IC, system LSI, super LSI, or ultra LSI, depending on the difference in integration.
Also, the method to turn to the integrated circuit is not limited to LSI, and it may be actualized as a dedicated circuit or a general purpose processor. FPGA (Field Programmable Gate Array), which can be programmed after the manufacture of LSI, or a reconfigurable processor, in which the connection and the setting of the circuit cell within LSI can be reconfigured, may be used.
Further, if the technique of integrated circuit to replace LSI appears with the progress of semiconductor technique or associated technology, the integration of functional block may be carried out by using such technique. The application is possible in the field of biotechnology.

### INDUSTRIAL APPLICABILITY

The access network system, the connection station device, the radio base station device, and the packet loss reducing method according to the present invention make it possible to reduce packet loss during handover of mobile terminal and to eliminate wasteful consumption of band. In this respect, the present invention is useful in the access network system, the connection station device, the_radio base station device, and the packet loss reducing method to actualize mobility control in the Wide Area Ethernet (registered trademark).

## Claims

1. An access network system, comprising a mobile terminal, a connection station device connected with an external IP network to relay the communication between said mobile terminal and said external IP network, to which said mobile terminal belongs, a relay station device connected to said connection station device and for relaying a packet transmitted from said external IP network to said mobile terminal via said connection station device, a plurality of radio base station devices connected to said relay station device and said mobile terminal and for receiving said packet relayed by said relay station device from said relay station device and for transferring to said mobile terminal, and for transferring the packet from said mobile terminal to said relay station device in order to transmit to said external IP network, and a network management unit to make up a VLAN path between said connection station device and said radio base station device, wherein:
said radio base station where said mobile terminal are connected and said connection station device generates own MAC addresses based on identification information assigned to said mobile terminals as notified from the network management unit;
said network management unit arranges, when said mobile terminal starts handover, a point-to-multipoint VLAN path by adding said new radio base station device to a point-to-point VLAN path between said previous radio base station device where said mobile terminal has been connected before the start of said handover and
said connection station device; and
said connection station device encapsulates packet received from said external IP network side by adding a new MAC header with a broadcast address for a destination MAC address and with the MAC address of said connection station device for a source MAC address, and adding an identification information of said mobile terminal starting the handover, and transfers the encapsulated packet via said point-to-multipoint VLAN path.

2. The access network system according to claim 1, wherein each MAC address generated at said connection station device and said radio base station where said mobile terminal is connected is processed by mapping to said identification information of said mobile terminal on 1:1 basis and also include a specific ID to indicate said connection station device or said radio base station where said mobile terminal is connected.

3. The access network system according to claim 1, wherein said connection station device transfers the encapsulated packet by using a broadcast address to the destination MAC address when a difference between electric field intensity received from said previous radio base station device and electric field intensity received from said new radio base station device is equal to or lower than a predetermined value after said point-to-multipoint VLAN path has been made up by said network management unit, and in other cases, transfers the encapsulated packet by using a unicast address of the radio base station device with high electric field intensity as the destination MAC address.

4. The access network system according to claim 1, wherein said network management unit prunes a branch part of said VLAN path between said connection station device and said previous radio base station device when said handover of said mobile terminal has been completed.

5. The access network system according to claim 1, wherein said previous radio base station device deletes said own MAC address corresponding to identification information of said mobile terminal after completion of said handover of said mobile terminal.

6. The access network system according to claim 1, wherein said connection station device encapsulates packet by adding a MAC header with said unicast MAC address of said radio base station device, where said mobile terminal is connected, as destination MAC address, and said own MAC address as source MAC address, and by adding said identification information corresponding to said mobile terminal, to said packet received from said external IP network side except during said handover of said mobile terminal, and transfers said encapsulated packet via said point-to-point VLAN path between said connection station device and said radio base station device where said mobile terminal is connected.

7. A connection station device in an access network system, comprising a mobile terminal, a connection station device connected with an external IP network to relay the communication between said mobile terminal and said external IP network, to which said mobile terminal belongs, a relay station device connected to said connection station device and for relaying a packet transmitted from said external IP network to said mobile terminal via said connection station device, a plurality of radio base station devices connected to said relay station device and said mobile terminal and for receiving said packet relayed by said relay station device from said relay station device and for transferring to said mobile terminal, and for transferring the packet from said mobile terminal to said relay station device in order to transmit to said external IP network, and a network management unit to make up a VLAN path between said connection station device and said radio base station device(s), wherein said connection station device comprises:
MAC address generating means for generating a plurality of own MAC addresses based on identification information assigned to said mobile terminal as notified from said network management unit;
receiving means for receiving a packet from said external IP network side to said mobile terminal;
judging means for judging whether said mobile terminal is during handover or not;
encapsulating means for encapsulating packet by adding a new MAC header with a broadcast address for a destination MAC address and with own MAC address generated by said MAC address generating means for source MAC address, and adding an identification information of said mobile terminal starting the handover to said packet received by said receiving means when it is judged that said mobile terminal is during handover by said judging means; and
transfer means for transferring said packet encapsulated by said encapsulating means via a point-to-multipoint VLAN path made up by said network management unit between said radio base station device where said mobile terminal has been connected before said handover and own device, and also between said radio base station device where said mobile terminal will be connected after said handover and own device when said mobile terminal starts the handover.

8. The connection station device according to claim 7, wherein said MAC address generating means generates MAC address processed by mapping to said identification information of said mobile terminal on 1:1 basis and also including a specific ID to indicate own device.

9. The connection station device according to claim 7, wherein said encapsulating means encapsulates packet by adding a MAC header with said unicast MAC address of said radio base station device, where said mobile terminal is connected, as destination MAC address,and said MAC address generated by said MAC address generating means as source MAC address, and by adding said identification information corresponding to said mobile terminal to said packet received by said receiving means when it is judged that said mobile terminal is not during handover by said judging means.

10. The connection station device according to claim 7, wherein said receiving means receives a packet from said mobile terminal via said relay station device; and
said encapsulating means removes the MAC header of said packet from said mobile terminal and the identification information of said mobile terminal, and said transfer means transfers said packet where said MAC header and identification information of said mobile terminal have been removed, to said external IP network when it is judged by said judging means that the packet from said mobile terminal received via said relay station device is transmitted to said external IP network via the device itself.

11. A radio base station device in an access network system, comprising a mobile terminal, a connection station device connected with an external IP network to relay the communication between said mobile terminal and said external IP network, to which said mobile terminal belongs, a relay station device connected to said connection station device and for relaying a packet transmitted from said external IP network to said mobile terminal via said connection station device, a plurality of radio base station devices connected to said relay station device and said mobile terminal and for receiving said packet relayed by said relay station device and for transferring to said mobile terminal, and for transferring the packet from said mobile terminal to said relay station device in order to transmit to said external IP network, and a network management unit to make up a VLAN path between said connection station device and said radio base station device, wherein said radio base station device, comprises:
MAC address generating means for generating a plurality of own MAC addresses based on identification information assigned to said mobile terminal as notified from said network management unit;
receiving means for receiving said packet from said external IP network encapsulated by said connection station device;
judging means for judging whether the destination MAC address of MAC header of said encapsulated packet received by said receiving means is a broadcast address or a unicast address;
deleting means for deleting MAC header of said encapsulated packet and identification information of said mobile terminal when said encapsulated packet is judged as a packet having said broadcast address by said judging means and when the identification information of said mobile terminal added to said packet is the same as the identification information notified from said management unit, or when said encapsulated packet is judged as a packet having said unicast address and when said unicast address is the same as one of own MAC addresses corresponding to the identification information of said mobile terminal generated by said MAC address generating means; and
transfer means for transferring said packet, where MAC header and portion of identification information of said mobile terminal have been deleted by said deleting means, to said mobile terminal.

12. The radio base station device according to claim 11, wherein said MAC address generating means generates MAC address processed by mapping to said identification information of said mobile terminal on 1:1 basis and also including a specific ID to indicate own device.

13. The radio base station device according to claim 11, wherein said device further comprises encapsulating means for encapsulating packet by adding a MAC header with a MAC address of said connection station device for a unicast destination address and with own MAC address for a source MAC address, and adding identification information of said mobile terminal, to the packet received by said receiving means and to be sent to said external IP network from said mobile terminal; and
said transfer means transfers said packet encapsulated by said encapsulating means to said external IP network via said relay station device.

14. A packet loss reducing method in an access network system, comprising a mobile terminal, a connection station device connected with an external IP network to relay the communication between said mobile terminal and said external IP network, to which said mobile terminal belongs, a relay station device connected to said connection station device and for relaying a packet transmitted from said external IP network to said mobile terminal via said connection station device, a plurality of radio base station devices connected to said relay station device and said mobile terminal and for receiving said packet relayed by said relay station device and for transferring to said mobile terminal, and for transferring the packet from said mobile terminal to said relay station device in order to transmit to said external IP network, and a network management unit to make up a VLAN path between said connection station device and said radio base station device, wherein said method comprising the steps of:
generating a plurality of own MAC addresses based on identification information assigned to said mobile terminal as notified from said network management unit by said radio base station where said connection station device and said mobile terminal are connected;
constituting a point-to-multipoint VLAN path where said new radio base station device where said mobile terminal will be connected is added to a point-to-point VLAN path between said previous radio base station device where said mobile terminal has been connected before starting said handover and said connection station device, by said network management unit when said mobile terminal starts the handover; and
said connection station device encapsulates packet received from said external IP network side by adding a MAC header with a broadcast address for a destination MAC address and with MAC address of said connection station device for source MAC address, and by adding an identification information of said mobile terminal starting the handover, and transfers the encapsulated packet via said point-to-multipoint VLAN path.

15. The packet loss reducing method according to claim 14, wherein each MAC address generated at said connection station device and said radio base station where said mobile terminal is connected is processed by mapping to said identification information of said mobile terminal on 1:1 basis and also includes a specific ID to indicate said connection station device or said radio base station where said mobile terminal is connected.

16. The packet loss reducing method according to claim 14, wherein said method further comprises the steps of transferring said encapsulated packet by using a broadcast address for the destination address when a difference between electric field intensity received from said previous radio base station device and electric field intensity received from said new radio base station device is equal to or lower than a predetermined value after said point-to-multipoint VLAN path has been made up by said network management unit, and in other cases, transfers the encapsulated packet by using unicast address of the radio base station device with high electric field intensity as the destination address.

17. The packet loss reducing method according to claim 14, wherein said network management unit prunes a branch part of said VLAN path between said connection station device and said previous radio base station device when said handover of said mobile terminal has been completed.

18. The packet loss reducing method according to claim 14, wherein said previous radio base station device deletes own MAC address corresponding to identification information of said mobile terminal after completion of said handover of said mobile terminal.

19. The packet loss reducing method according to claim 14, wherein said connection station device encapsulates packet by adding a MAC header with said unicast MAC address of said radio base station device, where said mobile terminal is connected, as destination MAC address, and said own MAC address as source MAC address, and by adding said identification information corresponding to said mobile terminal, to said packet received from said external IP network side except during said handover of said mobile terminal, and transfers said encapsulated packet via said point-to-point VLAN path between said connection station device and said radio base station device where said mobile terminal is connected.
